# EUROPEAN PATENT SPECIFICATION

(11) **EP 3 473 421 B1**
(45) Date of publication and mention of the grant of the patent: **25.12.2019**
(21) Application number: 17814425.9
(22) Date of filing: 15.02.2017
(51) Int. Cl.: B29D 30/28, B29D 30/30, B29D 30/14, B29D 30/16

(54) **AUXILIARY PRESSING ROLLER AND JOINT-PRESSING ROLLER WITH AUXILIARY PRESSING ROLLER FOR TIRE FORMING MACHINE**
HILFSANDRUCKWALZE UND VERBINDUNGSPRESSWALZE MIT HILFSANDRUCKWALZE FÜR EINE REIFENFORMMASCHINE
ROULEAU DE PRESSION AUXILIAIRE ET ROULEAU DE PRESSION DE JOINT AVEC ROULEAU DE PRESSION AUXILIAIRE POUR MACHINE DE FORMATION DE PNEUS

(30) Priority: 24.06.2016 CN 201610473943; 24.06.2016 CN 201620642223 U
(43) Date of publication of application: 24.04.2019
(73) Proprietor: QINGDAO SENTURY TIRE CO., LTD., Qingdao, Shandong 266000 (CN)
(72) Inventor: LI, Zhongdong, Qingdao Shandong 266000 (CN); PAN, Youshang, Qingdao Shandong 266000 (CN); ZHANG, Weiwei, Qingdao Shandong 266000 (CN); CHANG, Huimin, Qingdao Shandong 266000 (CN); WANG, Xueyi, Qingdao Shandong 266000 (CN); QIN, Long, Qingdao Shandong 266000 (CN)
(74) Representative: J A Kemp LLP
(86) International application number: PCT/CN2017/073556
(87) International publication number: WO 2017/219686

(56) References cited:
- EP-A1- 0 576 923
- EP-A1- 2 286 986
- WO-A1-2004/103688
- CN-A- 101 992 558
- CN-A- 104 943 213
- CN-A- 105 881 948
- CN-U- 201 685 463
- CN-U- 201 685 463
- CN-U- 205 818 492
- JP-A- 2008 155 418
- US-A- 1 465 177
- US-A- 1 677 401
- US-A1- 2013 220 517

## Description

### TECHNICAL FIELD

The present invention relates to a pressure roller for tire manufacturing and particularly to an auxiliary pressure roller and a joint pressure roller with the same for a tire forming machine, and belongs to the technical field of tire manufacturing.

### BACKGROUND OF THE PRESENT INVENTION

Generally, in accordance with the requirements of the tire forming technology, the sidewall joints of tire sidewall with liner composite parts are lap joints, and the sidewall joints are controlled to be 3 to 4 mm. However, it is likely to result in tire bulging, depression and the like. This problem can be effectively avoided by downsizing the sidewall joints or by using butt joints. However, after the sidewall joints are downsized, existing joint pressure roller for a tire forming machine will make the tails of the sidewall joints open when rolling the sidewall joints, so that the sidewall joints are cracked partially during the forming and reverse wrapping of green tires (tire blanks before vulcanization).

At present, for many domestic and imported tire forming machines, the fitting of liner composite parts with sidewall and the pressing of sidewall joints are realized by multi-plate pressure rollers, so that the shape of the surface of the pressure roller may be ensured to be consistent with the shape of a component during the press-fit, and the pressure roller may be allowed to come into effective contact with the surface of the component. As a result, the press-fit effect is improved, and a proper press-fit force may be produced. However, a prior joint pressure roller for a tire forming machine consists of a plurality of plates (usually six plates). To ensure the press-fit force applied to the joint, a strong spring is mounted under each roller plate. By such an arrangement, the pressure roller will realize a very large press force, and the surface of the pressure roller is nearly tangential to the surface of a forming drum, that is, the surface of the pressure roller is nearly in point contact with the surface of the forming drum. However, this press-fit approach for the joint is very likely to make the tail of the sidewall joint open.

EP 2286986A1 discloses a pressure roller assembly and tire manufacturing method using the same.

EP 0576923A1 discloses a tyre construction machine for the preparation of pneumatic tyre blanks with an assembly drum for receiving piles and a pressure roller cooperating with it.

CN 201685463U discloses a special rolling device for a carcass pressing roller, belonging to the field of tire industrial manufacturing. The device comprises a box, a frame, a drive system, a transmission system and a rolling system.

US 20130220517A1 discloses a method for producing a green tire blank, at least one stitching roller is applied to the blank with the use of a resilient roller support.

US 1677401 A1 discloses an apparatus of relatively simple construction for rolling down the carcass forming material as it winds on the forming member.

### SUMMARY OF THE PRESENT INVENTION

In order to overcome the above deficiencies and enable that a joint can be pressed tightly and will not open, roller plate of a pressure roller should be powerful and can deform according to a surface of a drum so that the pressure roller comes into effective contact with a surface of a component. In view of this, the present application provides an auxiliary pressure roller according to claim 1 and a joint pressure roller with the same for a tire forming machine according to claim 8. An auxiliary pressure roller is additionally provided front of a primary pressure roller in order to provide a prepress-fit force before press-fitting.

The present application employs the following technical solutions.

An auxiliary pressure roller is provided, comprising a roller plate, a roller drum, a roller shaft, an elastic layer, support devices and a base, wherein the roller plate is arranged outside the roller drum and surround the roller drum; the roller shaft is arranged inside the roller drum; the elastic layer is arranged above or outside the roller shaft, and the elastic layer is located in a wrapping range of the roller plate; two ends of the roller shaft are roller shaft ends, and the support device is provided below the roller shaft end; and, the support devices are located on the base and are elastic, so that the roller shaft is allowed to move up and down according to its own stress condition.

Preferably, the base is located at two ends of the roller shaft, guide grooves are formed on two sides of the base, and the roller shaft end is extended out of the guide groove. The guide grooves mainly function to provide passages for the roller shaft or the roller shaft ends to be extended outward and mounted on the base, and can guide the roller shaft to move up and down.

Preferably, the elastic layer is an elastic rubber layer. The elastic force of the rubber layer is not necessarily too large as long as it approximates to a spring having an elastic coefficient of 1 N/mm.

Preferably, the number of roller plates of the auxiliary pressure roller is not less than 1, and the roller plates are uniform in structure and successively sleeved on the roller drum. For example, optionally, there are 10 roller plates each having a width of 90 mm, a diameter of 65 mm and a thickness of 8 mm.

Preferably, a rolling element is provided between the roller plate and the roller drum, that is, the roller plate is able to rotate relative to the roller drum by the rolling element. The operation mode is similar to that of a rolling bearing. Therefore, the rolling element may be a roll cylinder or balls. Apparently, the roll cylinder also needs to be arranged longitudinally. In this construction, the roller plate, the roller drum and the rolling element may be machined into a one-piece member of the product.

Preferably, the base is U-shaped and located on a lower side and a lateral side of the roller drum, in order to support the whole auxiliary pressure roller.

Preferably, (1) there are two support devices located on two sides of the roller shaft, respectively; each of the support devices comprises a support spring, a support rod, a guide cylinder and a connection portion, wherein the support spring is sleeved on a periphery of the support rod; the connection portion is fixed to an upper portion of the support rod; the guide cylinder is located outside the support spring, and there is an allowance between the guide cylinder and the connection portion; the support rod is able to pass through the guide cylinder; a first clamping member having a diameter less than an outer diameter of the support spring is provided in the guide cylinder; and, in the whole auxiliary pressure roller, the roller shaft ends on two sides pass through the connection portions on two sides.

In the above structure, a lower end of the support rod is a free end which is able to pass through the guide cylinder and the first clamping member to continuously move down, but the connection portion is unable to pass through the guide cylinder. In this case, the first clamping member prevents the support spring from continuously moving down and provides an upward support force for the support spring.

Exactly, the first clamping member is located at a lower end of the support spring, and its inner diameter or distance is greater than the diameter of the support rod and less than the outer diameter of the support spring.

Or, (2) there are two support devices located on two sides of the roller shaft, respectively; each of the support devices comprises a support spring, a support rod and a guide cylinder, wherein the support spring is sleeved on a periphery of the support rod, and the roller shaft end is fixed to an upper portion of the support rod, that is, the roller shaft is able to move along with the movement of the support rod; the guide cylinder is located outside the support spring, and there is an allowance, used for the extension and contraction of the support spring, between the guide cylinder and a lower edge of the roller shaft end; the support rod is able to pass through the guide cylinder; and, a first clamping member having a diameter less than an outer diameter of the support spring is provided in the guide cylinder. In this way, it can be ensured that after the support spring is compressed under stress, the support rod is moved down and the roller shaft is driven to move down.

In the above structure, a lower end of the support rod is a free end which is able to pass through the guide cylinder and the first clamping member to continuously move down, but the roller shaft end is unable to pass through the guide cylinder. In this case, the first clamping member prevents the support spring from continuously moving down and provides an upward support force for the support spring.

Exactly, the first clamping member is located at a lower end of the support spring, and its inner diameter or distance is greater than the diameter of the support rod and less than the outer diameter of the support spring.

The support devices in situation (1) are different from those in situation (2) in that: in each of the support device in situation (1), the support rod and the roller shaft end are separately configured, connection portion is provided at junction thereof; the connection portion is fixed to the support rod, and the roller shaft end is connected to the connection portion; the support device in situation (2) may be regarded as being obtained based on the situation (1), i.e., being obtained by integrating the connection portion with the roller shaft end of the support device in situation (1), so that in this case, the shaft roller end is directly connected to upper end of the support rod.

The support devices in situation (1) are of a split type, and it is more convenient to disassemble and assemble the whole device in comparison to situation (2), that is, the disassembly may be realized by directly pulling the roller shaft out from the connection portions; while the support devices in situation (2) are of an integral type, and are simple in structure and easy in connection.

Preferably, the guide cylinder is a hollow cylinder, and a first clamping member, used for preventing the support spring from falling down, is provided in the guide cylinder.

Preferably, the guide cylinder is mounted on a side of the base and located below the guide groove.

Or, (3) there are two support devices located on two sides of the roller shaft, respectively; each of the support devices comprises a support spring and a support rod, wherein the support spring is sleeved on a periphery of the support rod, and a bottom of the support spring and a bottom of the support rod are fixed; a connection opening is formed at a lower portion of the roller shaft end, and an upper end of the support rod is inserted into the connection opening; there is an allowance between the upper end of the support rod and a bottom of the connection opening; and, a diameter of the connection opening is less than an outer diameter of the support spring. By such an arrangement, it can be ensured that the support rod is able to continuously move into the connection opening when an elastic force is applied to the support spring, so that the stressed roller shaft is moved down
and, different from the support devices in the former two situations, the lower end of the support device is fixed in situation 3, and the upper end thereof is movable relative to the roller shaft; while in the former two situations, the whole support device is movable, only the upper end of the support device is fixed relative to the roller shaft while the lower end thereof is movable relative to the guide cylinder.

Preferably, the support device further comprises a guide cylinder which is a hollow cylinder; there is an allowance between an upper end of the guide cylinder and the connection opening, and the support spring is located in the guide cylinder; and, the guide cylinder may stabilize the movement of the support spring and prevent the support spring from deflecting left or right.

Preferably, a bottom of the guide cylinder is of a solid structure, the guide cylinder is arranged on an outer side of the base, and a lower end of the support rod is disposed in the guide cylinder.

Preferably, the guide cylinder is arranged below the guide groove.

Preferably, an internal groove is formed in an upper portion of the connection opening, a second clamping member is provided on the top of the support rod, and an outer diameter of the second clamping member is greater than the diameter of the connection opening and less than the diameter of the internal groove. By this arrangement, it can be ensured that the upper end of the support rod is always located in the connection opening, and the support rod is prevented from completely falling off the connection opening during the up-and-down vibration of the support spring and thus resulting in the misalignment of the support rod and the connection opening.

A joint pressure roller with an auxiliary pressure roller for a tire forming machine is provided, comprising a primary pressure roller and an auxiliary pressure roller, wherein the structure of the auxiliary pressure roller is described as above; the primary pressure roller comprises a primary roller plate, a primary roller drum, a primary roller shaft and a primary base; the primary roller plate is mounted on the primary roller drum; the primary roller shaft is arranged inside the primary roller drum; a spring is arranged above the primary roller shaft; and, two sides of the primary roller shaft are mounted on the primary base.

Preferably, the base and the primary base are of an integral structure and of a U-shaped structure as a whole.

The primary roller drum of the primary pressure roller and the roller drum of the auxiliary pressure roller may be finished products, and are usually ABS plastic products which have almost no elasticity. In the present application, the elasticity of the spring above the primary roller shaft in the primary pressure roller is higher than the elasticity of the elastic layer in the auxiliary pressure roller. The elastic coefficient of the spring in the primary pressure roller is greater than or equal to 2.0 N/mm, preferably 2.5 N/mm; while the elasticity of the elastic layer approximates to a spring having an elastic coefficient of 1 N/mm. In this way, an object to be pressed such as a joint may be firstly prepressed by the press force generated by the auxiliary pressure roller and then pressed by the primary pressure roller.

In addition, in the arrangement of the roller plates, there are preferably a plurality of roller plates in the auxiliary pressure roller and the primary pressure roller. Particularly, there are preferably 5 to 10 roller plates.

Compared with the prior art, the present application has the following beneficial effects.
(1) The auxiliary pressure roller uses a multi-plate pressure roller, and the roller plates are supported by an elastic rubber layer, so that the roller plates can be changed in position according to the press-fit surface, and the surface of the whole pressure roller is consistent with the press-fit surface in terms of shape. Particularly, a plurality of roller plates can move up and down according to the shape of the surface of a forming drum to form a curved surface with the surface of the forming drum, so as to realize effective contact.
(2) Support springs are mounted at two ends of the roller drum, and in combination with the elastic layer, it can be ensured that a too large press-fit force will not be generated during prepressing, so that the prepressing effect is achieved. In other words, a joint is prepressed by a small press force, and the joint will not open.
(3) The position of the mounting hole of the auxiliary pressure roller may be the same as that of the original pressure roller, and the auxiliary pressure roller may be mounted directly by using the mounting hole of the original pressure roller. That is, the auxiliary pressure roller is mounted directly by a fixation bolt for the primary pressure roller, and no screw holes needs to be drilled again. Accordingly, it is easy and convenient to mount, and the original equipment structure and function will not be changed.
(4) During the press-fitting of a joint, the joint is prepressed by the auxiliary pressure roller at a small press force, so that the joint is adhered and will not open; then, the joint is rolled once by the primary pressure roller at a high press force, so it is ensured that the joint can be pressed tightly. In this way, it can be ensured that the joint can effectively press-fitted and will not open.

### BRIEF DESCRIPTION OF THE DRAWINGS

Fig. 1 is a front view of an auxiliary pressure roller;
Fig. 2 is a partially enlarged view of the auxiliary pressure roller in Fig. 1;
Fig. 3 is a side view of a main body of the auxiliary pressure roller;
Fig. 4 is a longitudinally sectional view of the auxiliary pressure roller;
Fig. 5 is a stereographic diagram of a support device in Embodiment 4;
Fig. 6 is a front sectional view of the support device in Embodiment 4;
Fig. 7 is a side sectional view of the support device in Embodiment 4;
Fig. 8 is a top view 1 of a positional relation between a first clamping member and a guide cylinder;
Fig. 9 is a top view 2 of a positional relation between a first clamping member and a guide cylinder;
Fig. 10 is a top view 3 of a positional relation between a first clamping member and a guide cylinder;
Fig. 11 is a front view of a support device in Embodiment 7;
Fig. 12 is a side sectional view of the support device in Embodiment 7;
Fig. 13 is a front view of a support device in Embodiment 8;
Fig. 14 is a side sectional view of the support device in Embodiment 8; and
Fig. 15 is a schematic diagram of a joint pressure roller with an auxiliary pressure roller for a tire forming machine;
in which: 1: auxiliary pressure roller; 11: roller plate; 12: roller drum; 13: roller shaft; 14: elastic layer; 15: support device; 16: base; 17: guide groove; 18: rolling element; 1301: roller shaft end; 1302: connection opening; 1303: internal groove; 1501: support spring; 1502: support rod; 1503: guide cylinder; 1504: connection portion; 1505: first clamping member; 1506: second clamping member; 2: primary pressure roller; 21: primary roller plate; 22: primary roller drum; 23: primary roller shaft; and, 24: primary base.

### DETAILED DESCRIPTION OF THE PRESENT INVENTION

The present application will be described below in detail by embodiments.

### Embodiment 1

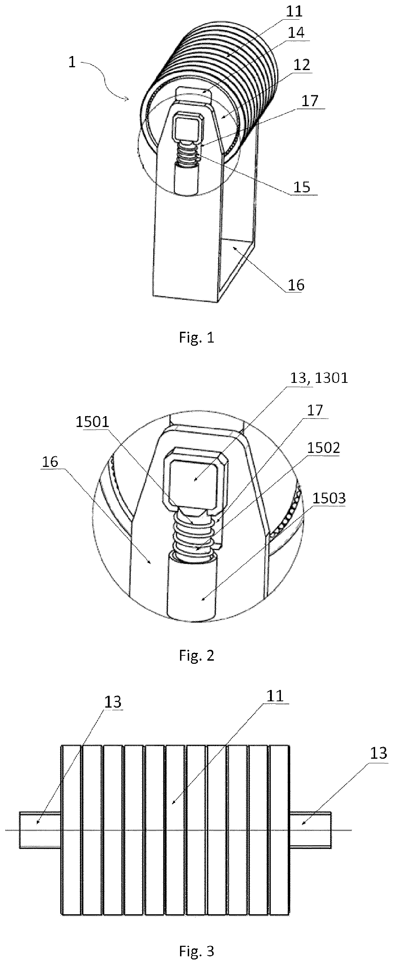

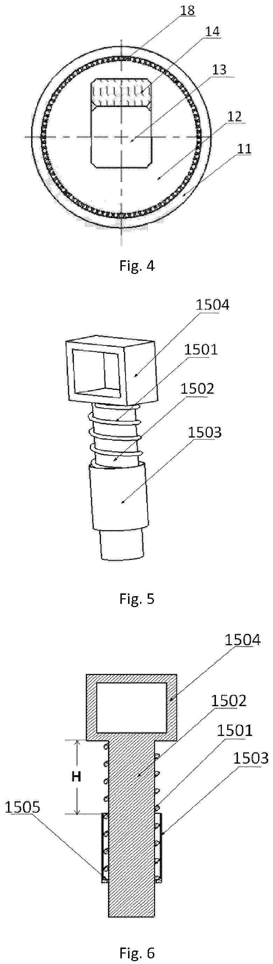

As shown in Figs. 1-4, an auxiliary pressure roller 1 includes a roller plate 11, a roller drum 12, a roller shaft 13, an elastic layer 14, support devices 15, a base 16 and guide grooves 17, wherein the roller plate 11 is arranged outside the roller drum 12 and surround the roller drum 12; the roller shaft 13 is longitudinally arranged inside the roller drum 12, the elastic layer 14 is arranged above the roller shaft 13 in the longitudinal direction (as shown in Fig. 4), and the elastic layer 14 is located within a wrapping range of the roller plate 11; the base 16 is located at two ends of the roller shaft 13 to support the roller shaft 13; the guide grooves 17 are formed on two sides of the base 16, and the guide grooves 17 are opened in an up-down direction; two ends of the roller shaft 13 are roller shaft ends 1301 which are extended out of the guide grooves 17; and, the support devices 15 are disposed below the roller shaft ends 1301, and the support devices 15 are elastic to allow the roller shaft 13 to move up and down along with the guide grooves 16 according to its own stress condition.

In this embodiment, the roller plate 11 may move around the roller drum 12 under the drive of an external force. If the roller plate 11 and the roller drum 12 are fixed relative to each other and the elastic layer 14 is arranged on the periphery of the roller shaft 13, the roller plate 11 and the roller drum 12 may be rotated synchronously.

The roller drum 12 conventionally is a cylinder into which the roller shaft 13 is embedded, as shown in Figs. 1 and 4. The roller shaft 13 may use an axially arranged cylinder or rectangular body.

### Embodiment 2

Based on Embodiment 1, there are 8 roller plates 11 which are uniform in structure and successively arranged on the roller drum 13. The elastic layer 14 is an elastic rubber layer, the elasticity of which equivalents to a spring having an elastic coefficient of 1 N/mm.

### Embodiment 3

Based on Embodiment 1 or 2, as shown in Fig. 4, a rolling element 18, used for supporting the roller plate(s) 11 to rotate around the roller drum 12, is provided between the roller plate(s) 11 and the roller drum 12. The relationship between the roller plate(s) 11, the rolling element 18 and the roller drum 12 is equivalent to a roll bearing, so the rolling element 18 may be a roll cylinder or balls.

### Embodiment 4

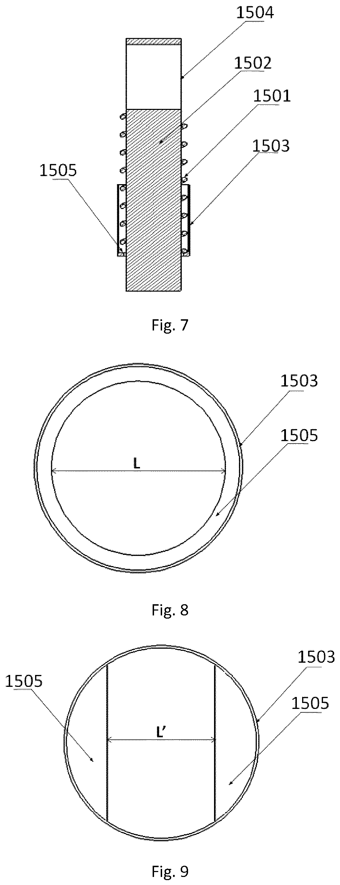

Based on Embodiment 1, 2 or 3, there are two support devices 15 located at two ends of the roller shaft 13, respectively. As shown in Figs. 5-7, each of the support devices 15 includes a support spring 1501, a support rod 1502, a guide cylinder 1503 and a connection portion 1504, wherein the support spring 1501 is sleeved on the periphery of the support rod 1502, and the connection portion 1504 is fixed to an upper portion of the support rod 1502. The guide cylinder 1503 is located outside the support spring 1501, and there is an allowance (shown by H in Fig. 6) between the guide cylinder 1503 and the connection portion 1504. The lower end of the support rod 1502 is a free end which is able to pass through the guide cylinder 1503 and to move up and down in the guide cylinder 1503. The maximum movement distance is a distance from a lower edge of the connection portion 1504 to the guide cylinder 1503, i.e., a distance H reserved by the allowance. However, the connection portion 1504 is unable to pass through the guide cylinder 1503. A first clamping member 1505, having a diameter less than the outer diameter of the support spring 1501, is provided in the guide cylinder 1503, as shown in Figs. 6 and 7. In this case, the inner diameter of the first clamping member 1505 is less than the outer diameter of the support spring 1501, so the support spring 1501 may be prevented from falling off the guide cylinder 1503 during its downward movement. In the whole auxiliary pressure roller 1, the roller shaft ends 1301 on two sides pass through the connection portions 1504 on two sides.

The working principle of this embodiment is as follows. When an object to be pressed rolls on the auxiliary pressure roller 1, the roller plates 11 are regarded as a directly pressed part, and the object to be pressed drives the roller plates 11 to rotate. The elastic layer 14 provides an elastic force for the roller plates 11 under stress, and the press force from the object to be pressed is further transferred to the roller drum 12 and then transferred to the roller shaft 13. The roller shaft 13 is stressed and then drives the connection portions 1504 to move down, so that the support rods 1502 are allowed to move down. At this time, the lower ends of the support springs 1501 are blocked by the first clamping members 1505, then subjected to a force from the connection portions 1504 and thus compressed downward. According to different forces provided by the object to be pressed, the support springs 1501 may vibrate up and down. The guide cylinders 1503 may stabilize the support springs 1501 during the up-and-down vibration and prevent the support springs 1501 from deflecting left or right. The guide groove 17 provides a movement space for the up-and-down movement of the roller shaft 13.

It is to be noted that the connection portions 1504 in this embodiment are arranged according to the structure of the roller shaft ends 1301. If the roller shaft ends 1301 are of a square column structure, the connection portions 1504 are designed to be columns with a hollow square column; and, if the roller shaft ends 1301 are of a cylindrical structure, the connection portions 1504 are designed to be a circular ring (not shown). Particularly, when the roller shaft ends 1301 are of a cylindrical structure and the connection portions 1504 are designed to be circular ring, the roller shaft ends 1301 are able to rotate in the connection portions 1504. If the roller shaft ends 1301 and the connection portions 1504 may be rotated relative to each other, the rotation of the roller plates 11 on the roller drum 12 may be replaced. That is, in this case, the roller plates 11 and the roller drum 12 may be of an integral structure and do not move relative to each other. When the auxiliary pressure roller 1 is pressed, the roller plates 11 and the roller drum 12 are around the roller shaft 13, rotating in the connection portions 1504. In this case, the elastic layer 14 is arranged outside the roller shaft 13, that is, the elastic layer 14 longitudinally wraps the roller shaft 13 and provides an elastic force for the roller plates 11.

### Embodiment 5

Based on Embodiment 1, 2 or 3, there are two support devices 15 located at two ends of the roller shaft 13, respectively. Each of the support devices 15 includes a support spring 1501, a support rod 1502 and a guide cylinder 1503, wherein the support spring 1501 is sleeved on the periphery of the support rod 1502, and the roller shaft ends 1301 are fixed to an upper portion of the support rod 1502. The guide cylinder 1503 is located outside the support spring 1501, and there is an allowance between the guide cylinder 1503 and the roller shaft end 1301. The lower end of the support rod 1502 is a free end which is able to pass through the guide cylinder 1503 and to move up and down in the guide cylinder 1503. The maximum movement distance is a distance from a lower edge of the roller shaft end 1301 to the guide cylinder 1503, i.e., a distance reserved by the allowance. However, the roller shaft end 1301 is unable to pass through the guide cylinder 1503. A first clamping member 1505 having a diameter less than the outer diameter of the support spring 1501 is provided in the guide cylinder 1503, that is, the inner diameter of the first clamping member 1505 is less than the outer diameter of the support spring 1501, so the support spring 1501 may be prevented from falling off the guide cylinder 1503 during its downward movement.

In this embodiment, the guide cylinder 1503 is a hollow cylinder, and the first clamping member 1505 is a circuit ring surrounding the wall of the guide cylinder 1503. Of course, the first clamping member 1505 may also be any other component which is disposed inside the guide cylinder 1503 to prevent the support spring 1505 from extending downward.

This embodiment is different from Embodiment 4 in that: in this embodiment, the roller shaft end 1301 is directly connected to the support rod 1502, that is, the connection portion 1504 and the roller shaft end 1301 in Embodiment 4 are fabricated integrally, or in other words, the roller shaft end 1301 is directly connected to the upper portion of the support rod 1502 instead of the connection portion 1504. The working principle is basically the same as that in Embodiment 4.

### Embodiment 6

Based on Embodiment 4 or 5, the guide cylinder 1503 is fixed on a side of the base 16, as shown in Figs. 1 and 2.

In Embodiments 4-6, the first clamping member 1505 is located below the support spring 1501 in at least the following three ways. Preferably, the first clamping member 1505 is arranged on the inner diameter of the guide cylinder 1503. The first clamping member 1505 is provided in such a way that the support rod 1502 is able to pass through the first clamping member 1505 but the support spring 1501 is blocked by the first clamping member 1505. Therefore, improvements made according to the concepts in the three implementations provided by the present application shall fall into the protection scope of the present application.

As a first implementation, Fig. 8 is a top view 1 of the positional relation between the first clamping member and the guide cylinder (other components are omitted), wherein the first clamping member 1505 is of a circuit ring, an outer edge of the circular ring is mounted on the guide cylinder 1503, and the inner diameter L of the circular ring is greater than the diameter of the support rod 1502 and less than the outer diameter of the support spring 1501.

As a second implementation, Fig. 9 is a top view 2 of the positional relation between the first clamping member and the guide cylinder (other components are omitted), wherein the first clamping member 1505 is two arched components, arcs of the arched components are mounted on the guide cylinder 1503, and the distance L' between the chords of the two arched components is greater than the diameter of the support rod 1502 and less than the outer diameter of the support spring 1501. As shown in Fig. 9, preferably, the arched components are arranged symmetrically, and the chords of the arced components are parallel to each other.

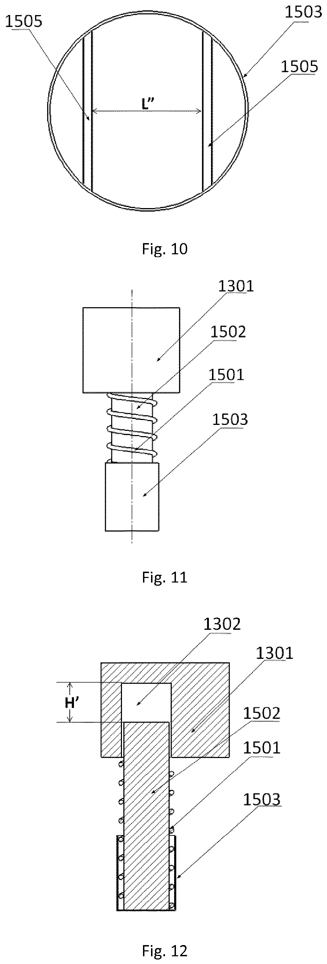

As a third implementation, Fig. 10 is a top view 3 of the positional relation between the first clamping member and the guide cylinder (other components are omitted), wherein the first clamping member 1505 is two cross bars, two ends of the cross bar are mounted on the guide cylinder 1503, and the distance L" between the two cross bars is greater than the diameter of the support rod 1502 and less than the outer diameter of the support spring 1501. As shown in Fig. 10, the two cross bars are preferably arranged symmetrically.

### Embodiment 7

Based on Embodiment 1, 2 or 3, there are two support devices 15 located at two ends of the roller shaft 13, respectively. As shown in Figs. 11-12, each of the support devices 15 includes a support spring 1501, a support rod 1502 and a guide cylinder 1503. The support spring 1501 is sleeved on the periphery of the support rod 1502. The guide cylinder 1503 is located outside the support spring 1501, and the bottom of the guide cylinder 1503 may prevent the support spring 1501 and the support rod 1502 from continuously moving down. For example, the lower end of the support rod 1502 is welded on the bottom of the guide cylinder 1503. There is an allowance between the upper end of the guide cylinder 1503 and the roller shaft end 1301. A connection opening 1302 is formed on the roller shaft end 1301, and the connection opening 1302 is opened downward. The upper end of the support rod 1502 is inserted into the connection opening 1302, and there is an allowance (shown by H' in Fig. 12) between the upper end of the support rod 1502 and the bottom of the connection opening 1302, for allowing the support rod 1502 to move in the connection opening. The diameter of the connection opening 1302 is less than the outer diameter of the support spring 1501, so that the support spring 1501 is not allowed to enter.

It is to be noted that only the roller shaft end 1301 of the auxiliary pressure roller 1 is shown in Fig. 12 and the middle portion of the roller shaft 13, the roller drum 12, the roller plates 11 and other components are omitted.

The working principle of this embodiment is as follows. When an object to be pressed rolls on the auxiliary pressure roller 1, the roller plates 11 are regarded as a directly pressed part, and the object to be pressed drives the roller plates 11 to rotate. The elastic layer 14 provides an elastic force for the roller plates 11 under stress, and the press force from the object to be pressed is further transferred to the roller drum 12 and then transferred to the roller shaft ends 1301. The roller shaft ends 1301 are supported by the support springs 1501, so there is an allowance H', that is a gap, between the bottom of the connection openings 1302 and the top of the support rods 1502. The pressed roller shaft ends 1301 are moved down to compress the support springs 1501, so that the top of the support rods 1502 are moved toward the inside of the connection openings 1302, and the support springs 1501 may vibrate up and down according to different forces provided by the object to be pressed. On one hand, the guide cylinders 1503 supports the bottom ends of the support springs 1501 to prevent them from continuously moving down; on the other hand, the guide cylinders 1503 stabilize the up-and-down vibration of the support springs 1501 and prevent the support springs 1501 from deflecting left or right. The guide grooves 17 provide a movement space for the up-and-down movement of the roller shaft 13.

### Embodiment 8

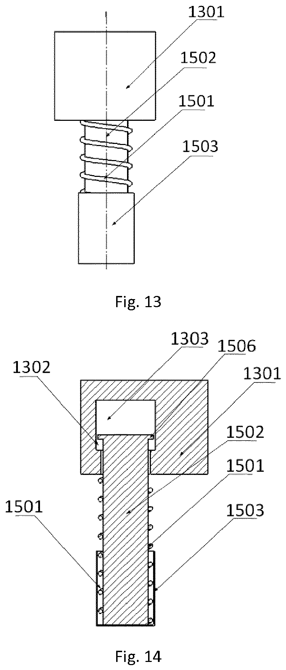

Based on Embodiment 7, as shown in Figs. 13-14, an internal groove 1303 is formed in an upper portion of the connection opening 1302, a second clamping member 1506 is provided on the top of the support rod 1502, and the outer diameter of the second clamping member 1506 is greater than the diameter of the connection opening 1302 and less than the diameter of the internal groove 1303. In this way, it can be ensured that the upper end of the support rod 1502 is always located in the connection opening, and the support rod 1502 is prevented from completely falling off the connection opening 1302 during the bounce of the support spring 1501. The elastic coefficient of the support spring 1501 is 2 N/mm.

It is to be noted that only the roller shaft end 1301 of the auxiliary pressure roller 1 is shown in Fig. 12 and the middle portion of the roller shaft 13, the roller drum 14, the roller plates 11 and other components are omitted.

### Embodiment 9

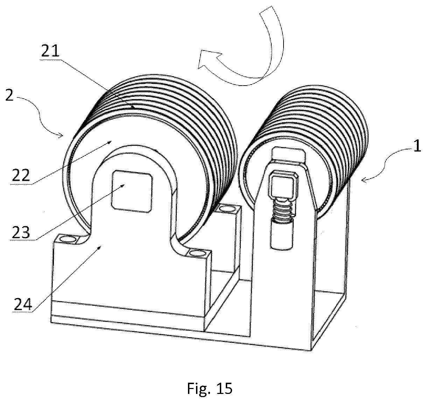

A joint pressure roller with an auxiliary pressure roller for a tire forming machine is provided, as shown in Fig. 15, including an auxiliary pressure roller 1 and a primary pressure roller 2. The auxiliary pressure roller 1 is as described in any one of Embodiments 1-8. The primary pressure roller 2 includes a primary roller plate 21, a primary roller drum 22, a primary roller shaft 23 and a primary base 24. The primary roller plate 21 is arranged outside the primary roller drum 22 and surround the primary roller drum 22. The primary roller plate 21 is able to move around the primary roller drum 22 under the drive of an external force. The primary roller shaft 23 is arranged inside the primary roller drum 22. A spring (not shown) is longitudinally arranged above the primary roller shaft 23. The primary base 24 is located at two ends of the primary roller shaft 23 to support the primary roller shaft 23. The movement direction of the primary roller plate 21 is the same as that of the roller plate 11, and an object to be pressed firstly passes through the auxiliary pressure roller 1 and then the primary pressure roller 2 when it rolls on the pressure rollers.

### Embodiment 10

Based on Embodiment 9, there are six primary roller plates 21, a strong spring having an elastic coefficient of 2.5 N/mm is provided above the primary roller shaft 23, and each of the primary roller plates 21 is supported by three springs.

### Embodiment 11

Based on Embodiment 9 or 10, both the primary base 24 and the base 16 are U-shaped and share the bottom, thereby enhancing the stability, making the motion rhythm of the both the same and saving the material.

When an object to be pressed moves on the pressure rollers, the movement direction is shown in Fig.15. The object to be presses rotates clockwise, and the roller plates of the auxiliary pressure roller and that of the primary pressure roller are driven to rotate counterclockwise. In this way, the object to be pressed firstly passes through the auxiliary pressure roller. Since the press force provided by the auxiliary pressure roller is relatively small, the object to be pressed is prepressed. The pressed object to be pressed is continuously rotated to the primary pressure roller and then further compactly pressed by the primary pressure roller. If the primary pressure roller and the auxiliary pressure roller are interchanged in position, the rotation directions of both the object to be pressed and the pressure rollers will also be changed.

The foregoing embodiments are merely for describing preferred implementations of the present application, rather limiting the scope of the present application. Various transformations and improvements made to the technical solutions of the present application by a person of ordinary skill in the art shall fall into the protection scope as defined by the appended claims.

## Claims

1. An auxiliary pressure roller, comprising a roller plate (11), a roller drum (12), a roller shaft (13), an elastic layer (14), support devices (15) and a base (16); wherein,
the roller plate (11) is arranged outside the roller drum (12) and surround the roller drum (12);
the roller shaft (13) is arranged inside the roller drum (12);
the elastic layer (14) is arranged above or outside the roller shaft (13), and the elastic layer (14) is located in a wrapping range of the roller plate (11);
two ends of the roller shaft (13) are roller shaft ends (1301), and the support device (15) is provided below the roller shaft end (1301); **characterized in that**
the support devices (15) are located on the base (16) and are elastic, so that the roller shaft (13) is allowed to move up and down according to its own stress condition;
wherein there are two support devices (15) located on two sides of the roller shaft (13), respectively; each of the support devices (15) comprises a support spring (1501), a support rod (1502), a guide cylinder (1503) and a connection portion (1504), wherein the support spring (1501) is sleeved on a periphery of the support rod (1502); the connection portion (1504) is fixed to an upper portion of the support rod (1502); the guide cylinder (1503) is located outside the support spring (1501), and there is an allowance between the guide cylinder (1503) and the connection portion (1504); the support rod (1502) is able to pass through the guide cylinder (1503); a first clamping member (1505) having a diameter less than an outer diameter of the support spring (1501) is provided in the guide cylinder (1503); and, in the whole auxiliary pressure roller (1), the roller shaft ends (1301) on two sides pass through the connection portions (1504) on two sides, connecting with the support devices (15); or,
there are two support devices (15) located on two sides of the roller shaft (13), respectively; each of the support devices (15) comprises a support spring (1501), a support rod (1502) and a guide cylinder (1503), wherein the support spring (1501) is sleeved on a periphery of the support rod (1502), and the roller shaft end (1301) is fixed to an upper portion of the support rod (1502); the guide cylinder (1503) is located outside the support spring (1501), and there is an allowance between the guide cylinder (1503) and a lower edge of the roller shaft end (1301); the support rod (1502) is able to pass through the guide cylinder (1503); and, a first clamping member (1505) having a diameter less than an outer diameter of the support spring (1501) is provided in the guide cylinder (1503); or,
there are two support devices (15) located on two sides of the roller shaft (13), respectively; each of the support devices (15) comprises a support spring (1501) and a support rod (1502), wherein the support spring (1501) is sleeved on a periphery of the support rod (1502), and a bottom of the support spring (1501) and a bottom of the support rod (1502) are fixed; a connection opening (1302) is formed at a lower portion of the roller shaft end (1301), and an upper end of the support rod (1502) is inserted into the connection opening (1302); there is an allowance between the upper end of the support rod (1502) and a bottom of the connection opening (1302); and, a diameter of the connection opening (1302) is less than an outer diameter of the support spring (1501).

2. The auxiliary pressure roller according to claim 1, wherein, the base (16) is located at two ends of the roller shaft (13), guide grooves (17) are formed on two sides of the base (16), and the roller shaft end (1301) is extended out of the guide groove (17).

3. The auxiliary pressure roller according to claim 1 or 2, wherein, the elastic layer (14) is an elastic rubber layer.

4. The auxiliary pressure roller according to any one of claims 1-3, wherein, the number of roller plate (11) of the auxiliary pressure roller is not less than 1; the roller plates (11) are uniform in structure and successively sleeved on the roller drum (12); and a rolling element (18) is provided between the roller plates (11) and the roller drum (12).

5. The auxiliary pressure roller according to claim 1, wherein, an internal groove (1303) is formed in an upper portion of the connection opening (1302), a second clamping member (1506) is provided on the top of the support rod (1502), and an outer diameter of the second clamping member (1506) is greater than the diameter of the connection opening (1302) and less than a diameter of the internal groove (1303).

6. The auxiliary pressure roller according to claim 1 or 5, wherein, further comprises a guide cylinder (1503) which is a hollow cylinder; there is an allowance between an upper end of the guide cylinder (1503) and the connection opening (1302), and the support spring (1501) is located in the guide cylinder (1503).

7. The auxiliary pressure roller according to claim 6, wherein, a bottom of the guide cylinder (1503) is of a solid structure, the guide cylinder (1503) is arranged on an outer side of the base (16), and a lower end of the support rod (1502) is disposed in the guide cylinder (1503).

8. A joint pressure roller with an auxiliary pressure roller for a tire forming machine, comprising a primary pressure roller (2) and an auxiliary pressure roller (1), **characterized in that**, the structure of the auxiliary pressure roller (1) is defined according to any one of claims 1-7; the primary pressure roller (2) comprises a primary roller plate (21), a primary roller drum (22), a primary roller shaft (23) and a primary base (24); the primary roller plate (24) is mounted on the primary roller drum (22); the primary roller shaft (23) is arranged inside the primary roller drum (22); and, two sides of the primary roller shaft (23) are mounted on the primary base (24).

9. The joint pressure roller according to claim 8, wherein the base (16) and the primary base (24) are of an integral structure and of a U-shaped structure as a whole.

## Patentansprüche

1. Hilfsdruckrolle, die eine Rollenplatte (11), eine Rollentrommel (12), eine Rollenwelle (13), eine elastische Schicht (14), Stützvorrichtungen (15) und eine Basis (16) umfasst; wobei,
die Rollenplatte (11) außerhalb der Rollentrommel (12) angeordnet ist und die Rollentrommel (12) umgibt;
die Rollenwelle (13) innerhalb der Rollentrommel (12) angeordnet ist;
die elastische Schicht (14) oberhalb oder außerhalb der Rollenwelle (13) angeordnet ist, und sich die elastische Schicht (14) in einem Umwicklungsbereich der Rollenplatte (11) befindet;
zwei Enden der Rollenwelle (13) Rollenwellenenden (1301) sind, und die Stützvorrichtung (15) unterhalb des Rollenwellenendes (1301) vorgesehen ist;
**dadurch gekennzeichnet, dass**
sich die Stützvorrichtungen (15) auf der Basis (16) befinden und elastisch sind, so dass sich die Rollenwelle (13) gemäß ihrem eigenen Spannungszustand auf und ab bewegen kann;
wobei
sich an zwei Seiten der Rollenwelle (13) jeweils zwei Stützvorrichtungen (15) befinden; wobei jede der Stützvorrichtungen (15) eine Stützfeder (1501), eine Stützstange (1502), einen Führungszylinder (1503) und einen Verbindungsabschnitt (1504) aufweist, wobei die Stützfeder (1501) auf den Umfang der Stützstange (1502) geschoben ist; wobei der Verbindungsabschnitt (1504) an einem oberen Abschnitt der Stützstange (1502) befestigt ist; wobei der Führungszylinder (1503) außerhalb der Stützfeder (1501) angeordnet ist und zwischen dem Führungszylinder (1503) und dem Verbindungsabschnitt (1504) eine Toleranz besteht; wobei die Stützstange (1502) den Führungszylinder (1503) passieren kann; wobei ein erstes Klemmelement (1505) mit einem Durchmesser, der kleiner als ein Außendurchmesser der Stützfeder (1501) ist, in dem Führungszylinder (1503) vorgesehen ist; und wobei bei der gesamten Hilfsdruckrolle (1) die Rollenwellenenden (1301) an zwei Seiten die Verbindungsabschnitte (1504) an zwei Seiten durchlaufen, die mit den Stützvorrichtungen (15) verbunden sind; oder
sich an zwei Seiten der Rollenwelle (13) jeweils zwei Stützvorrichtungen (15) befinden; wobei jede der Stützvorrichtungen (15) eine Stützfeder (1501), eine Stützstange (1502) und einen Führungszylinder (1503) umfasst, wobei die Stützfeder (1501) an einem Umfang der Stützstange (1502) mit einer Hülse versehen ist und das Rollenwellenende (1301) an einem oberen Abschnitt der Stützstange (1502) befestigt ist; wobei der Führungszylinder (1503) außerhalb der Stützfeder (1501) angeordnet ist und eine Toleranz zwischen dem Führungszylinder (1503) und einer Unterkante des Rollenwellenendes (1301) besteht; wobei die Stützstange (1502) den Führungszylinder (1503) passieren kann; und wobei ein erstes Klemmelement (1505) mit einem Durchmesser von weniger als einem Außendurchmesser der Stützfeder (1501) in dem Führungszylinder (1503) vorgesehen ist; oder,
sich an zwei Seiten der Rollenwelle (13) jeweils zwei Stützvorrichtungen (15) befinden; wobei jede der Stützvorrichtungen (15) eine Stützfeder (1501) und eine Stützstange (1502) umfasst, wobei die Stützfeder (1501) auf den Umfang der Stützstange (1502) geschoben ist, und ein Boden der Stützfeder (1501) und ein Boden der Stützstange (1502) befestigt sind; wobei eine Verbindungsöffnung (1302) an einem unteren Abschnitt des Rollenwellenendes (1301) gebildet ist und ein oberes Ende der Stützstange (1502) in die Verbindungsöffnung (1302) eingesetzt ist; wobei zwischen dem oberen Ende der Stützstange (1502) und einem Boden der Verbindungsöffnung (1302) eine Toleranz vorhanden ist; und ein Durchmesser der Verbindungsöffnung (1302) kleiner als ein Außendurchmesser der Stützfeder (1501) ist.

2. Hilfsdruckrolle nach Anspruch 1, wobei sich die Basis (16) an zwei Enden der Rollenwelle (13) befindet, an zwei Seiten der Basis (16) Führungsnuten (17) gebildet sind und das Rollenwellenende (1301) aus der Führungsnut (17) herausragt.

3. Hilfsdruckrolle nach Anspruch 1 oder 2, wobei die elastische Schicht (14) eine elastische Gummischicht ist.

4. Hilfsdruckrolle nach einem der Ansprüche 1 bis 3, wobei die Anzahl der Rollenplatten (11) der Hilfsdruckrolle nicht weniger als 1 beträgt; wobei die Rollenplatten (11) eine gleichmäßige Struktur aufweisen und nacheinander auf die Rollentrommel (12) geschoben sind; und ein Rollelement (18) zwischen den Rollenplatten (11) und der Rollentrommel (12) vorgesehen ist.

5. Hilfsdruckrolle nach Anspruch 1, wobei eine innere Nut (1303) in einem oberen Abschnitt der Verbindungsöffnung (1302) gebildet ist, ein zweites Klemmelement (1506) an der Oberseite der Haltestange (1502) vorgesehen ist, und ein Außendurchmesser des zweiten Klemmelements (1506) größer als der Durchmesser der Verbindungsöffnung (1302) und kleiner als ein Durchmesser der inneren Nut (1303) ist.

6. Hilfsdruckrolle nach Anspruch 1 oder 5, bei der ferner ein Führungszylinder (1503) vorgesehen ist, der ein Hohlzylinder ist; wobei zwischen einem oberen Ende des Führungszylinders (1503) und der Verbindungsöffnung (1302) eine Toleranz besteht und sich die Stützfeder (1501) in dem Führungszylinder (1503) befindet.

7. Hilfsdruckrolle nach Anspruch 6, wobei ein Boden des Führungszylinders (1503) eine feste Struktur aufweist, der Führungszylinder (1503) an einer Außenseite der Basis (16) angeordnet ist, und ein unteres Ende der Stützstange (1502) in dem Führungszylinder (1503) angeordnet ist.

8. Gelenkdruckrolle mit einer Hilfsdruckrolle für eine Reifenformmaschine, die eine Primärdruckrolle (2) und eine Hilfsdruckrolle (1) umfasst, **dadurch gekennzeichnet, dass** der Aufbau der Hilfsdruckrolle (1) nach einem der Ansprüche 1-7 definiert ist; die Primärdruckrolle (2) eine Primärrollenplatte (21), eine Primärrollentrommel (22), eine Primärrollenwelle (23) und eine Primärbasis (24) umfasst; die Primärrollenplatte (24) auf der Primärrollentrommel (22) montiert ist; die Primärrollenwelle (23) innerhalb der Primärrollentrommel (22) angeordnet ist; und zwei Seiten der Primärrollenwelle (23) an der Primärbasis (24) montiert sind.

9. Gelenkdruckrolle nach Anspruch 8, wobei die Basis (16) und die Primärbasis (24) eine integrale Struktur und eine U-förmige Struktur als Ganzes aufweisen.

## Revendications

1. Rouleau de pression auxiliaire, comprenant une plaque de rouleau (11), un tambour de rouleau (12), un arbre de rouleau (13), une couche élastique (14),des dispositifs de support (15) et une base (16); dans lequel,
la plaque de rouleau (11) est agencée à l'extérieur du tambour de rouleau (12) et entoure le tambour de rouleau (12);
l'arbre de rouleau (13) est agencé à l'intérieur du tambour de rouleau (12);
la couche élastique (14) est agencée au-dessus ou à l'extérieur de l'arbre de rouleau (13), et la couche élastique (14) est située dans une plage d'emballage de la plaque de rouleau (11);
les deux extrémités de l'arbre de rouleau (13) sont des extrémités d'arbre de rouleau (1301), et le dispositif de support (15) est prévu sous l'extrémité de l'arbre de rouleau (1301);
**caractérisé en ce que**
les dispositifs de support (15) sont situés sur la base (16) et sont élastiques, de sorte que l'arbre de rouleau (13) puisse monter et descendre en fonction de ses propres conditions de contrainte;
dans lequel
il y a deux dispositifs de support (15) situés sur deux côtés de l'arbre de rouleau (13), respectivement; chacun des dispositifs de support (15) comprend un ressort de support (1501), une tige de support (1502), un cylindre de guidage (1503) et une partie de connexion (1504), le ressort de support (1501) étant manchonné à la périphérie de la tige de support (1502); la partie de connexion (1504) est fixée à une partie supérieure de la tige de support (1502); le cylindre de guidage (1503) est situé à l'extérieur du ressort de support (1501) et il y a une marge entre le cylindre de guidage (1503) et la partie de connexion (1504); la tige de support (1502) est capable de traverser le cylindre de guidage (1503); un premier élément de serrage (1505) ayant un diamètre inférieur à un diamètre extérieur du ressort de support (1501) est prévu dans le cylindre de guidage (1503); et, dans tout le rouleau de pression auxiliaire (1), les extrémités de l'arbre de rouleau (1301) passent sur deux côtés à travers les parties de connexion (1504) sur deux côtés, se connectant aux dispositifs de support (15); ou,
il y a deux dispositifs de support (15) situés sur deux côtés de l'arbre de rouleau (13), respectivement; chacun des dispositifs de support (15) comprend un ressort de support (1501), une tige de support (1502) et un cylindre de guidage (1503), le ressort de support (1501) étant manchonné sur une périphérie de la tige de support (1502), et l'extrémité de l'arbre de rouleau (1301) est fixée à une partie supérieure de la tige de support (1502); le cylindre de guidage (1503) est situé à l'extérieur du ressort de support (1501) et il y a une marge entre le cylindre de guidage (1503) et un bord inférieur de l'extrémité d'arbre de rouleau (1301); la tige de support (1502) est capable de traverser le cylindre de guidage (1503); et, un premier élément de serrage (1505) ayant un diamètre inférieur à un diamètre extérieur du ressort de support (1501) est prévu dans le cylindre de guidage (1503); ou,
il y a deux dispositifs de support (15) situés sur deux côtés de l'arbre de rouleau (13), respectivement; chacun des dispositifs de support (15) comprend un ressort de support (1501) et une tige de support (1502), le ressort de support (1501) étant manchonné sur une périphérie de la tige de support (1502) et un fond du ressort de support (1501) et un fond de la tige de support (1502) sont fixés; une ouverture de connexion (1302) est formée au niveau d'une partie inférieure de l'extrémité d'arbre de rouleau (1301) et une extrémité supérieure de la tige de support (1502) est insérée dans l'ouverture de connexion (1302); il y a une marge entre l'extrémité supérieure de la tige de support (1502) et un fond de l'ouverture de connexion (1302); et un diamètre de l'ouverture de connexion (1302) est inférieur à un diamètre extérieur du ressort de support (1501).

2. Rouleau de pression auxiliaire selon la revendication 1, dans lequel la base (16) est située aux deux extrémités de l'arbre de rouleau (13), des rainures de guidage (17) sont formées sur les deux côtés de la base (16) et l'extrémité de l'arbre de rouleau (1301) est sortie de la rainure de guidage (17).

3. Rouleau de pression auxiliaire selon la revendication 1 ou 2, dans lequel la couche élastique (14) est une couche de caoutchouc élastique.

4. Rouleau de pression auxiliaire selon l'une quelconque des revendications 1 à 3, dans lequel le nombre de plaques de rouleau (11) du rouleau de pression auxiliaire n'est pas inférieur à 1 ; les plaques de rouleau (11) ont une structure uniforme et sont successivement manchonnées sur le tambour de rouleau (12) ; et un élément de roulement (18) est prévu entre les plaques de rouleau (11) et le tambour de rouleau (12).

5. Rouleau de pression auxiliaire selon la revendication 1, dans lequel une rainure interne (1303) est formée dans une partie supérieure de l'ouverture de connexion (1302), un deuxième élément de serrage (1506) est prévu sur le dessus de la tige de support (1502), et un diamètre extérieur du deuxième élément de serrage (1506) est supérieur au diamètre de l'ouverture de connexion (1302) et inférieur à un diamètre de la rainure interne (1303).

6. Rouleau de pression auxiliaire selon la revendication 1 ou 5, dans lequel il comprend en outre un cylindre de guidage (1503) qui est un cylindre creux; il y a une marge entre une extrémité supérieure du cylindre de guidage (1503) et l'ouverture de connexion (1302), et le ressort de support (1501) est situé dans le cylindre de guidage (1503).

7. Rouleau de pression auxiliaire selon la revendication 6, dans lequel un fond du cylindre de guidage (1503) a une structure pleine, le cylindre de guidage (1503) est agencé sur un côté extérieur de la base (16) et une extrémité inférieure de la tige de support (1502) est disposée dans le cylindre de guidage (1503).

8. Rouleau de pression de joint avec un rouleau de pression auxiliaire pour une machine à façonner des pneus, comprenant un rouleau de pression primaire (2) et un rouleau de pression auxiliaire (1), **caractérisé en ce que** la structure du rouleau de pression auxiliaire (1) est défini selon l'une quelconque des revendications 1 à 7; le rouleau de pression primaire (2) comprend une plaque de rouleau primaire (21), un tambour de rouleau primaire (22), un arbre de rouleau primaire (23) et une base primaire (24); la plaque de rouleau primaire (24) est montée sur le tambour de rouleau primaire (22); l'arbre de rouleau primaire (23) est agencé à l'intérieur du tambour de rouleau primaire (22); et, deux côtés de l'axe de rouleau primaire (23) sont montés sur la base primaire (24).

9. Rouleau de pression de joint selon la revendication 8, dans lequel la base (16) et la base primaire (24) ont une structure intégrale et une structure en forme de U dans son ensemble.
